# DEMANDE DE BREVET EUROPEEN

(11) **EP 0 731 594 A1**
(43) Date de publication de la demande: **11.09.1996**
(21) Numéro de dépôt: 96400474.1
(22) Date de dépôt: 06.03.1996
(51) Int. Cl.: H04N 1/00, H04N 1/024

(54) **Scanner de tout type de document**

(30) Priorité: 08.03.1995 FR 9502702
(71) Demandeur: F.A.S.T. -France Advanced Systems Technology S.A.R.L., F-75008 Paris (FR)
(72) Inventeur: Bertrand, Dominique, 75017 Paris (FR); Gatto, Jean-Marie, 75116 Paris (FR)
(74) Mandataire: Dubois-Chabert, Guy

(57) **Abrégé**

La présente invention concerne un scanner de tout type de documents, utilisant une rangée de capteurs optiques, dont l'axe de lecture est en lecture directe sur le document (15) sans aucun contact sur une surface, comprenant un système de détection automatique du parallélisme du document (15) introduit, un rouleau d'entraînement dudit document (15) ; la rangée de capteurs (12) ayant l'angle réglable autour du rouleau d'entraînement, ce qui permet de régler l'angle d'introduction dudit document. Le présent système permet, en outre, une force d'introduction nulle des documents.

## Description

### Domaine technique

La présente invention concerne un scanner de tout type de document avec angle d'introduction du document réglable, utilisant un capteur dit sans contact avec un dispositif d'insertion et de détection automatique du parallélisme du document introduit.

### Etat de la technique antérieur

Les scanners de l'art antérieur présentent de nombreux inconvénients. Ils utilisent d'une part une rangée de capteurs munis d'une surface transparente en contact avec le document à lire et traversée par l'axe optique de lecture. D'autre part le parallélisme du document introduit dans ledit scanner n'est pas assuré.

Dans d'autres documents de l'art antérieur le parallélisme est assuré par décalage des axes optiques et du rouleau d'entraînement.

Ce décalage, tout en permettant l'introduction parallèle du document, et en évitant les rayures à l'emplacement de l'axe optique, n'évite pas les salissures de la lame transparente qui vont inévitablement finir par atteindre l'axe optique.

D'autre part l'arrondi du rouleau d'entraînement provoque un pincement du document introduit, provoquant des irrégularités en fonction de l'épaisseur ou du froissage du document, faisant que la distance n'est pas constante en fonction des caractéristiques du document.

Dans d'autres réalisations, pour éviter l'inconvénient d'encrassement, il a fallu aménager un gradin.

Pour pallier ces inconvénients, l'invention a pour objet un scanner pouvant détecter automatiquement la parallélisme des documents introduits et régler l'angle d'introduction de ces documents, sans utiliser le décalage du rouleau, et en ne provoquant plus ni rayures, ni encrassement.

### Exposé de l'invention

La présente invention concerne un scanner de tout type de documents, utilisant une rangée de capteurs, sans contact entre le document à lire et l'axe optique de lecture, caractérisé en ce qu'il comprend un système permettant d'introduire facilement le document à lire grâce à un ensemble simultané de deux mouvements opposés, l'un de blocage-libération l'autre de libération-blocage du document, ledit système permettant d'assurer en outre le parallélisme du document introduit.

Ledit scanner comprend également un rouleau d'entraînement dudit document, et une rangée de capteurs dont l'angle est réglable autour de l'axe du rouleau d'entraînement, ce qui permet de régler l'angle d'introduction dudit document.

Avantageusement la force d'introduction du document est nulle, et, concomitamment, lorsque le rouleau d'entraînement tourne il ne peut y avoir de frottement que s'il y a eu introduction du document.

Le scanner de l'invention détecte automatiquement le parallélisme des documents introduits et ce sans contact du document à l'endroit de l'axe optique, ledit parallélisme étant très important notamment lors de déchiffrage OCR ("Optical Character Recognition") ou autre.

Le parallélisme du document une fois détecté engendre le déclenchement du système de l'invention libérant le passage du document et maintenant le document à la bonne distance de l'axe optique, impliquant eux-mêmes l'avance du moteur lorsqu'ils sont à la bonne position.

Dans une réalisation avantageuse ledit scanner comprend le corps du scanner proprement dit autour duquel peut pivoter la rangée de capteurs selon un angle, un bac de réception permettant de recevoir le document introduit après lecture par ledit scanner. Le corps du scanner est formé par exemple d'un profilé en forme de "Té" aux deux extrémités latérales duquel sont fixés deux flasques. Dans d'autres réalisations cette forme de profilé en "Té" peut avantageusement avoir la forme idéale pour permettre d'adapter le scanner à son environnement. Ce scanner peut comporter un moteur, fixé soit par l'intermédiaire de deux pattes de fixation soit par une baïonnette ou un système de clipsage sur l'un des deux flasques, qui permet de faire tourner le rouleau au moyen d'engrenages. Ce moteur peut être fixé retourné vers l'intérieur du scanner, de façon à ne pas allonger celui-ci. Aux deux extrémités de l'axe de ce rouleau peuvent être disposées respectivement une première bague palier avec une collerette médiane et une seconde bague palier avec une collerette en extrémités, ce qui permet d'introduire la première extrémité dudit rouleau munie de la première bague palier dans un trou fermé tout autour, formé dans l'un des deux flasques, puis l'autre extrémité dans un trou ouvert sur le côté formé dans l'autre flasque, puis de fixer celui-ci à l'aide d'un moyen de fixation situé dans un de ces deux flasques.

Le scanner utilise un simple profilé :
- de préférence en aluminium ;
- de préférence de forme en "Té".

S'il n'a pas une forme en "Té", la forme peut être optimisée et simplifiée du fait d'une réalisation par profilé, par exemple en forme de L.

Avantageusement les moyens de fixation des flasques sont des vis qui servent à la fois de fixation et de tétons de positionnement à l'appareil. Un seul élément assure la fixation, par exemple un moyen de serrage placé entre les deux flasques sur le profilé.

Aux deux extrémités latérales de la rangée de capteurs sont fixés deux embouts, chacun de ces embouts étant muni de paliers en forme de bagues, fendus, élastiques, enclipsables ou non, pouvant être introduit sur chacune des bagues, tout en permettant une rotation de la rangée de capteurs. Chacun des embouts comporte de plus un moyen de serrage, par exemple un trou permettant le passage d'un ensemble vis-écrou, destiné à être introduit dans une ouverture en forme d'arc de cercle formée dans chacun des flasques de manière à permettre le serrage à l'angle voulu.

Avantageusement ledit scanner comporte en outre au moins un guide d'introduction du document à lire.

Le système de l'invention comporte notamment un ensemble de deux mécanismes aptes à avoir simultanément des mouvements opposés. Le premier mécanisme comprend une butée se terminant par un plan incliné sur lequel vient buter le document à lire avant la mise en route du moteur. Ce plan légèrement incliné permet un dégagement sûr du document lors du mouvement de la butée. Le second mécanisme comprend un élément qui se termine par une lame ressort qui vient plaquer le document contre le rouleau avant la mise en route du moteur. Dans une variante de réalisation la lame est une lame rigide, l'effet ressort est réalisé soit dans le levier sur lequel est fixée cette lame, soit dans le système de mise en mouvement de ce levier. Le système de l'invention comprend en outre au moins un moyen d'armement et/ou au moins un moyen de désarmement. Il comprend également un moyen de détection permettant la lecture de l'information indiquant que les deux mécanismes sont bien en place et que le document à lire est correctement introduit.

Le scanner de l'invention permet une lecture directe d'image (sans contact). Il n'y a donc pas de frottement sur une lame de verre qui serait traversée par l'axe optique.

Le système de l'invention étant sans vitre, ceci implique :
- pas de rayures ;
- pas de salissures ;
- pas de nettoyage ;
- pas d'entretien.

Avantageusement le système de détection du parallélisme du papier n'utilise pas le décalage du rouleau par rapport à l'axe optique.

Le léger angle formé par la butée permet, lors de la descente de celle-ci, que le document ne vienne pas frotter contre elle et l'attire dans le même sens lui aussi.

Cette butée peut si besoin elle-même être en forme de peigne, cette forme étant avantageuse car elle permet aux poussières éventuelles de passer au travers du peigne et de tomber hors du scanner.

La pression de la lame ressort s'applique concomitamment au dégagement de la butée. Cette même butée étant décalée de l'axe optique assure une distance correcte nécessaire à la détection du parallélisme d'introduction du document. Le mécanisme de l'invention assure des mouvements corrects entre d'une part la lame et le rouleau en position "pas de pression sur le papier" et d'autre part entre la butée et le rouleau (inversion simultanée des deux mouvements).

Le parallélisme du document introduit est détecté lorsque le document est bien appliqué contre la butée, l'axe optique pouvant lire et détecter si un nombre suffisant de pixels du document introduit sont lus, assurant ainsi que le document est bien parallèle. C'est la position relative des pixels lus qui indique si le document est bien parallèle. Cette butée peut être aussi proche que possible de l'axe optique sans toutefois déborder dessus.

L'angle de la rangée de capteurs réglable par rapport au scanner permet de régler l'angle d'introduction des documents, ce qui permet à chaque utilisateur d'utiliser le scanner pour son meilleur confort visuel.

L'ensemble du scanner est très simple et réduit à son strict minimum.

Le démontage de la rangée de capteurs ne nécessite pas le démontage du rouleau.

Le rouleau d'entraînement se démonte avec une extrême facilité par un passage prévu sur un des côtés.

Le moteur se fixe grâce à un système de baïonnettes permettant son remplacement immédiat sans aucun instrument.

Les flasques peuvent se monter sans vis grâce à un système de clipsage ; dans ce cas ils peuvent être réalisés dans une matière souple par exemple un plastique de type ABS, PVC, DELRIN ou autre.

Dans une autre réalisation c'est le profilé qui est constitué de cette matière souple permettant de réaliser le clipsage.

Le dispositif de commande peut comporter au moins :
- un relais ;
- et/ou un dispositif piézo-électrique ;
- et/ou un micromoteur.

Ce dispositif peut être à verrouillage permettant de n'appliquer qu'une impulsion pour "armer" le système (c'est-à-dire bloquer la lame ressort et dégager la butée), puis une autre bien plus faible pour désarmement. Un second dispositif, par exemple un relais, peut être utilisé pour le désarmement.

Ce dispositif de commande permet une réduction de la consommation d'énergie inutile dans les relais du fait d'un fonctionnement pendant un temps très court (intensité élevée) par utilisation de relais microscopique par exemple, grâce au dispositif de verrouillage.

Dans une autre réalisation un micromoteur permet à un chariot de se déplacer sur une vis sans fin dans les deux sens grâce à la rotation dans un sens ou l'autre du moteur.

Dans une variante de réalisation, le système de mouvements opposés comprend une première pièce se déplaçant selon un mouvement de translation et une seconde pièce se déplaçant selon un mouvement de pivotement, mises en mouvement toutes deux par un chariot commandé par un moyen de génération de mouvement.

La première pièce se termine par une butée se terminant par un plan incliné sur lequel vient buter le document à lire lorsque ledit scanner n'est pas en phase de lecture. Cette pièce est en outre munie de deux trous oblongs dans lesquels peuvent venir se déplacer des tétons correspondants, ces deux trous oblongs étant de directions parallèles, inclinés par rapport à l'axe de descente. Cette pièce est mue par un téton se déplaçant dans un trou oblong dont la forme est programmée pour permettre son déplacement.

La deuxième pièce est actionnée par un élément muni d'un téton se déplaçant dans un trou oblong dont la forme est calculée de manière à permettre des mouvements programmés. Une forme permet par exemple de coincer le chariot en extrémité de course.

Avantageusement les trous oblongs pratiqués dans les pièces en mouvement ont une forme calculée de manière à permettre des mouvements programmés.

### Brève description des dessins

- La figure 1 représente le scanner de l'invention ;
- la figure 2 représente une vue en éclaté du scanner de l'invention ;
- la figure 3 représente une vue de dessus du scanner de l'invention ;
- la figure 4 représente une coupe transversale du scanner de l'invention illustrant le système d'entraînement de celui-ci ;
- la figure 5 représente une coupe transversale du scanner de l'invention illustrant le réglage du capteur sans contact ;
- les figures 6 à 9 représentent des variantes de réalisation du scanner de l'invention ;
- la figure 10 illustre une introduction respectivement parallèle (partie A) et non parallèle (partie B) d'un document dans le scanner de l'invention ;
- la figure 11 illustre un système de contrôle du moteur;
- la figure 12 illustre un exemple de signaux de commande du moteur.

### Exposé détaillé de modes de réalisation

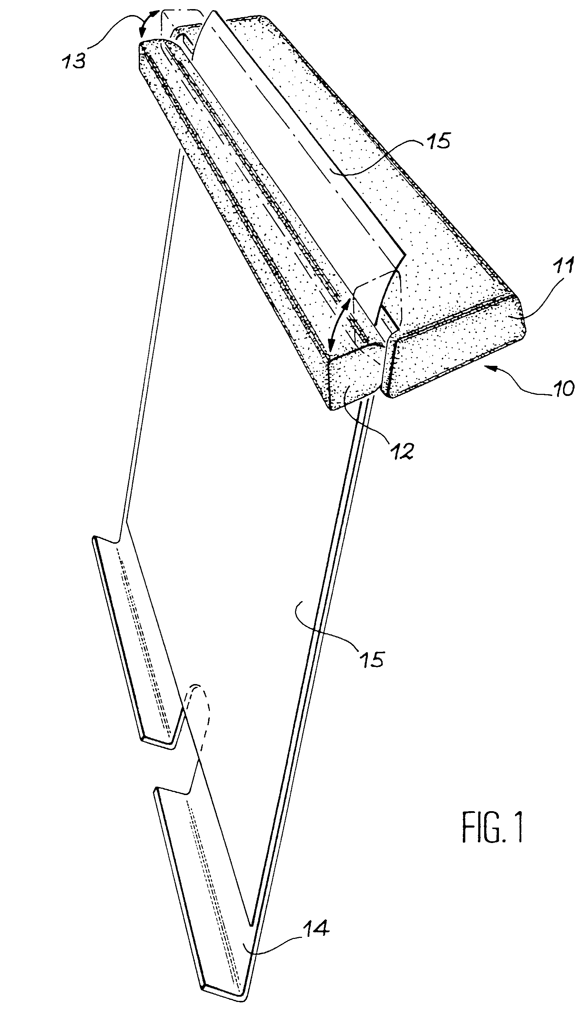

Comme représenté sur la figure 1 le scanner de l'invention 10 comprend le corps 11 du scanner proprement dit autour duquel peut pivoter une rangée de capteurs 12 selon un angle 13. Un bac de réception 14 permet de recevoir un document 15 après lecture par ledit scanner.

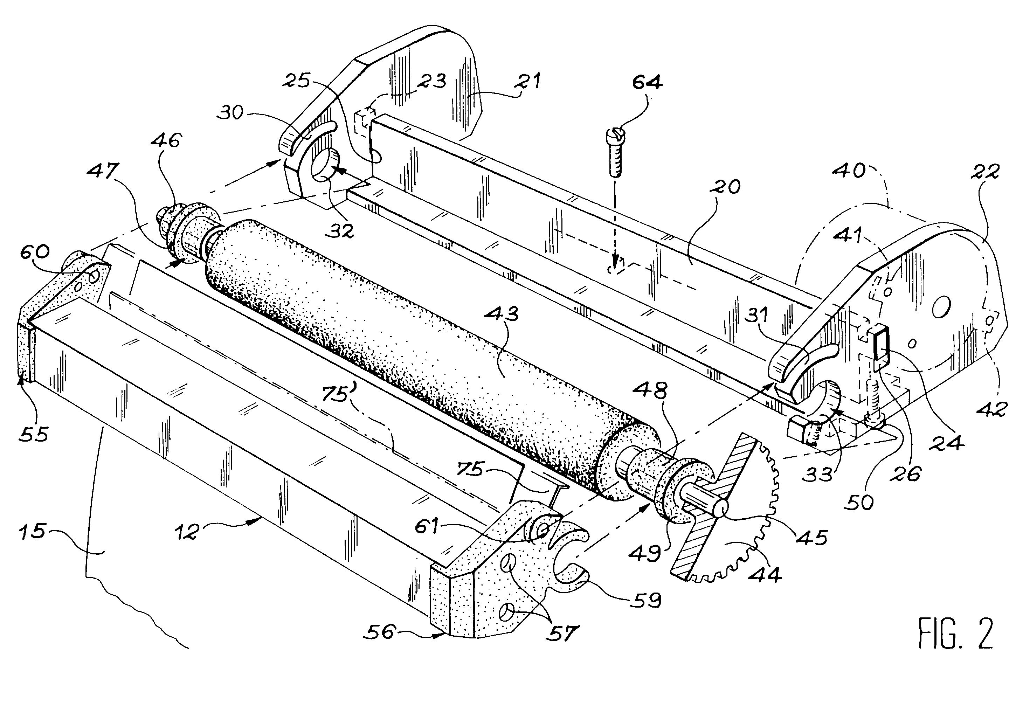

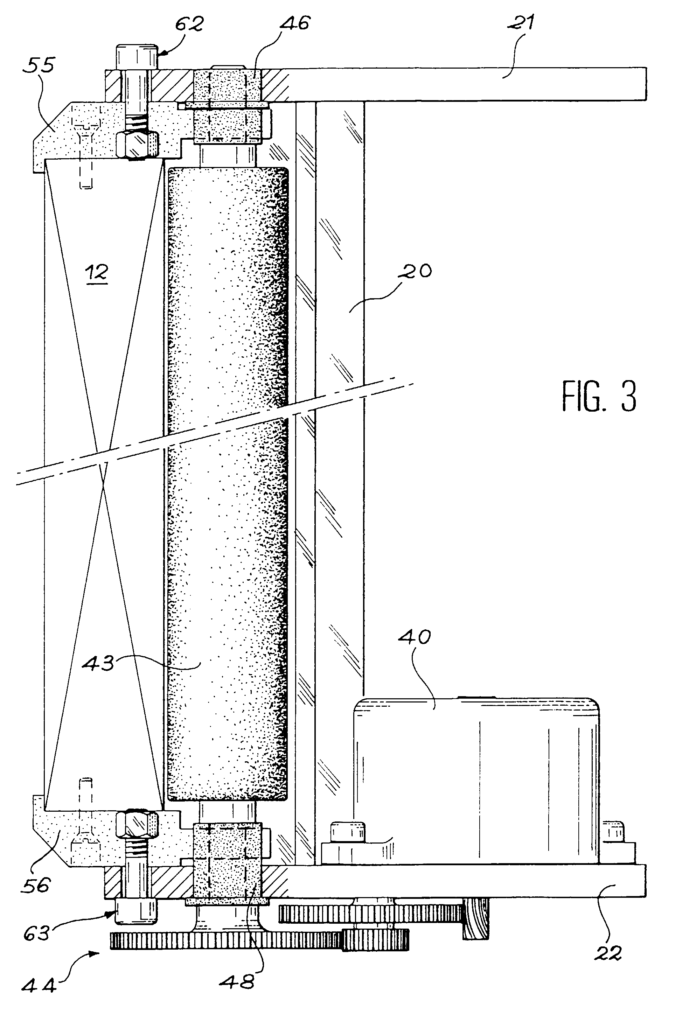

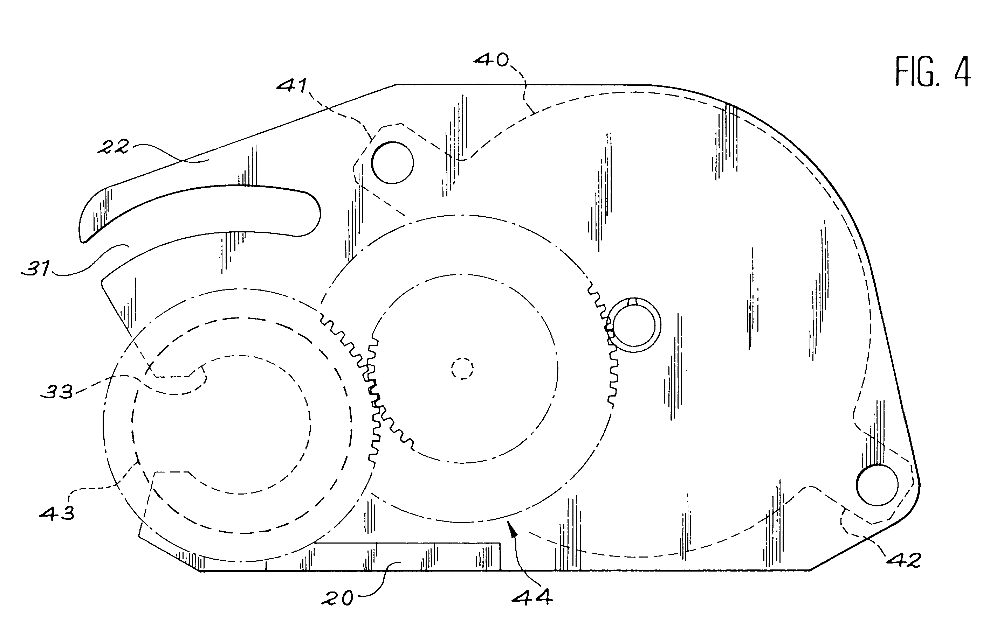

Comme représenté sur les figures 2, 3 et 4, le corps du scanner est formé d'un profilé 20, par exemple en forme de "Té" aux deux extrémités latérales duquel sont fixés deux flasques 21, 22. Sur la figure cette fixation est réalisée grâce à deux ergots 23, 24 introduits dans deux trous oblongs 25, 26 existants respectivement dans chacun de ces flasques. Chacun de ces flasques est muni d'une ouverture en forme d'arc de cercle 30, 31. L'un des deux comporte un trou cylindrique fermé tout autour 32, et l'autre un trou cylindrique 33 ouvert sur l'extérieur.

Ce scanner comporte également un moteur 40, fixé par exemple par l'intermédiaire de deux pattes de fixation 41 et 42 sur l'un (22) des deux flasques, qui permet de faire tourner un rouleau d'entraînement 43 au moyen d'engrenages 44. Le moteur est fixé, par exemple retourné vers l'intérieur du scanner, si on veut ne pas allonger celui-ci.

Aux deux extrémités de l'axe 45 de ce rouleau d'entraînement 43 sont disposées respectivement une bague palier 46 avec une collerette médiane 47, et une bague palier 48 avec une collerette en extrémité 49, ce qui permet d'introduire la première extrémité dudit rouleau munie de la bague palier 46 dans le trou fermé 32, puis l'autre extrémité dans le trou ouvert 33, puis de fixer celui-ci à l'aide d'une vis de fixation 50 située dans le flasque 22. Dans une variante de réalisation la bague 46 est fixée préalablement dans le trou 32.

Aux deux extrémités latérales de la rangée de capteurs 12 sont fixés deux embouts 55, 56, par exemple à l'aide de vis ou de clip de fixation qui peuvent être introduites dans les trous 57.

Chacun de ces embouts 55, 56 est muni de paliers enclipsables 59 pouvant être introduit sur chacune des bagues 46 et 48, tout en permettant une rotation de la rangée de capteurs.

Chacun des embouts comporte, de plus, un trou 60, 61 permettant le passage par exemple d'un ensemble vis-écrou 62 (63) destiné à être introduit dans chacune des ouvertures en forme d'arc de cercle 30, 31 de manière à permettre le serrage à l'angle d'introduction voulu.

Sur la figure 2 est représentée un moyen de serrage 64 permettant de fixer le scanner sur un capot ou châssis.

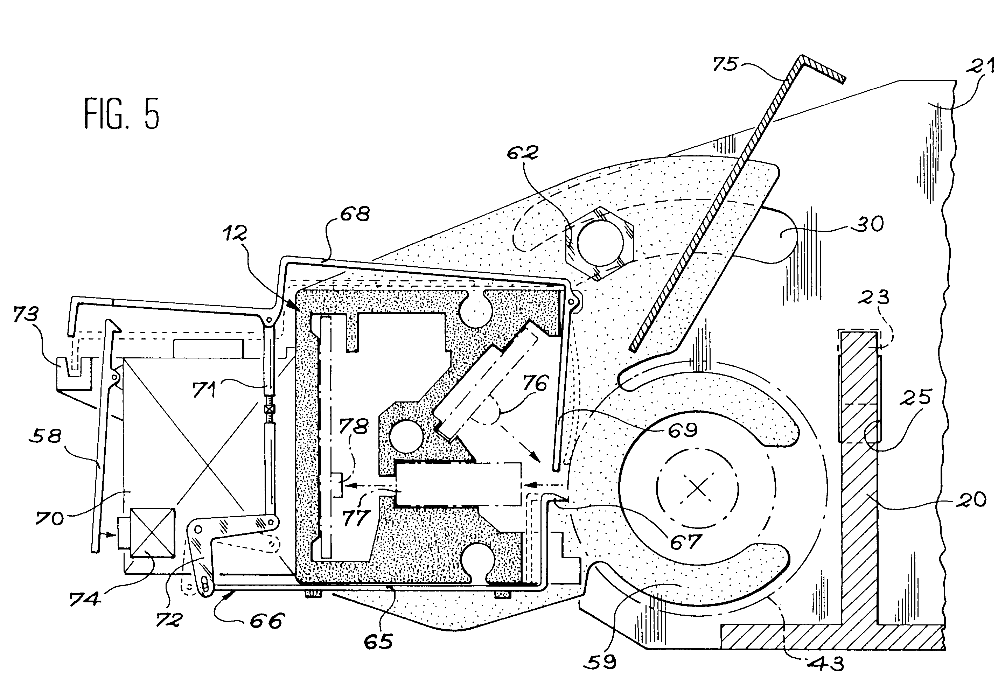

Comme représenté sur la figure 5, la rangée de capteurs 12 comporte une structure allongée dans laquelle sont disposées les barrettes réceptrices 78, et éventuellement un système émissif 76, par exemple une barrette constituée de diodes électroluminescente ou d'un tube générant de la lumière, ainsi qu'un moyen de focalisation 77, un ou plusieurs relais d'armement 70 et un petit relais de désarmement 74. Un système permet d'assurer d'autre part le mouvement d'une butée 67 contre laquelle vient s'appliquer le document introduit dans le scanner, et d'autre part d'assurer le mouvement d'une lame ressort 69 permettant la pression du document contre le rouleau 43.

Ce système, sous forme de tringlerie 66, permet l'introduction du document à lire grâce à un ensemble de deux mécanismes 65 et 68 aptes à avoir simultanément deux mouvements opposés: l'un de blocage-libération, l'autre de libération-blocage du document, ledit système permettant d'assurer en outre le parallélisme du document introduit.

Ce système comprend d'une part la butée 67 se terminant par un plan incliné sur lequel vient buter le papier avant la mise en route du moteur, et d'autre part un élément 68 qui se termine par la lame ressort 69.

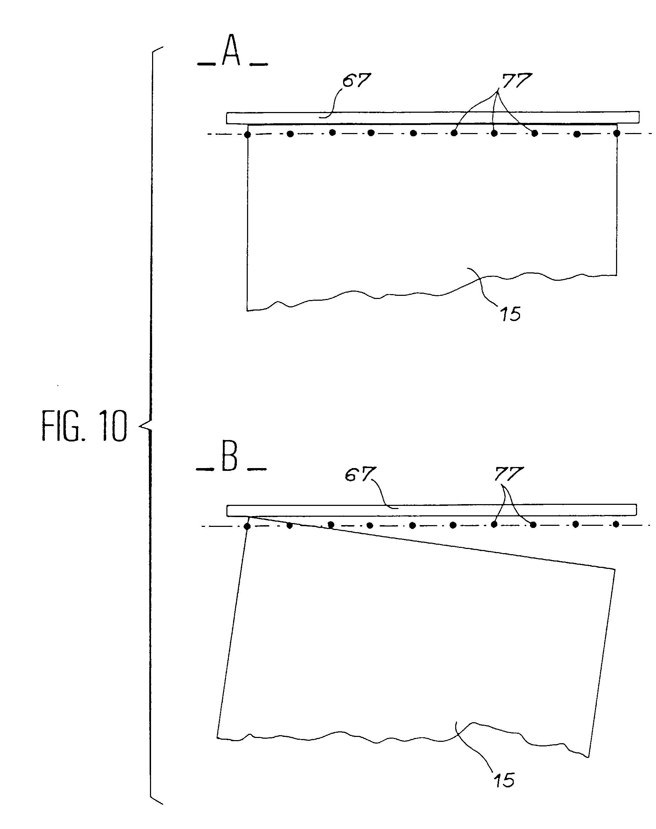

Des moyens de traitement adéquats permettent en lisant la position des pixels 77 lus de savoir si le document 15 est correctement introduit, notamment en ce qui concerne le parallélisme, comme représenté sur la figure 10.

Juste avant la mise en route du moteur la butée 67 descend laissant ainsi le passage pour le document à lire et concomitamment la lame ressort 69 vient plaquer le document contre le rouleau 43.

Après introduction correcte du document à lire détectée grâce aux moyens de traitement, ces dits moyens de traitement actionnent le ou les électroaimants d'armement 70. Un élément de blocage 58 permet le blocage de la tringlerie 66 en position "armé".

Les éléments 71 et 72 permettent de transmettre le mouvement à la butée 67.

Une cellule photoélectrique 73 placée à l'extrémité de l'élément 68 permet la lecture de l'information indiquant aux moyens de traitement si le système 66 est bien en place.

Ce mécanisme n'est activé que si le document introduit est parallèle à l'axe optique après lecture de pixels adéquats du capteur par les moyens de traitement.

L'électroaimant 74 permet de désarmer ce système 66 et de commander la détection qui permet aux moyens de traitement d'arrêter le moteur.

Un premier (75) et un second (75') guides permettent une meilleure introduction du document à lire.

Au moment où on introduit le document, le rouleau 43 n'est solidaire de rien et peut donc tourner librement. Le rouleau ne tourne que s'il y a eu introduction de document. Un tel système permet entre autre d'éviter que le caoutchouc du rouleau ne frotte sur le système avec lequel il coopère qui est la lame ressort 69 dans le cas de l'invention. Aucun effort supplémentaire n'est donc transmis au moteur. En effet, ce rouleau est étudié dans une matière à coefficient de frottement très fort. Par ailleurs le frottement papier-rouleau est nul alors que le frottement papier-lame de ressort est très faible grâce au bon coefficient de frottement du papier.

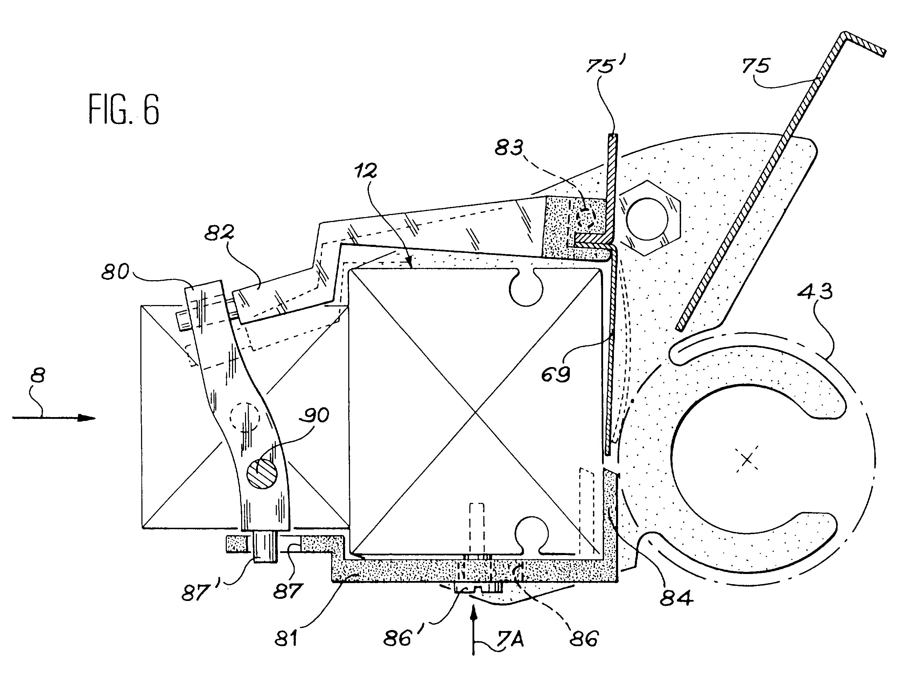

Dans une variante de réalisation illustrée aux figures 6 à 9 le système 66 comprend un chariot 80, commandé par au moins un électroaimant 79 (79'), qui peut se déplacer selon un mouvement de translation qui permet de mettre en mouvement une première pièce 81 selon un autre mouvement de translation dans une autre direction et une seconde pièce 82 selon un mouvement de pivotement autour d'un axe 83.

La première pièce 81 se termine par une butée 84 elle-même se terminant par un plan incliné contre lequel vient buter le document à lire lorsque ledit scanner n'est pas en phase de lecture.

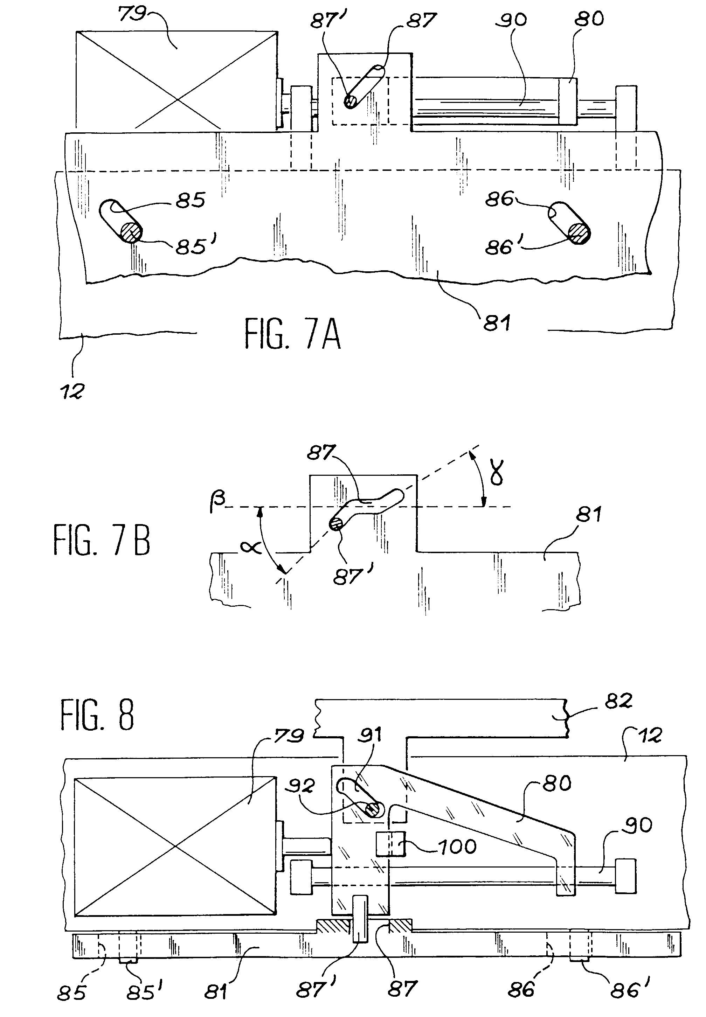

Les vues illustrées sur les figures 7A et 8 correspondent à des vues selon les flèches 7A et 8 représentées sur la figure 6.

Comme représenté sur la figure 7A la pièce 81 est munie de deux glissières ou trous oblongs 85, 86 dans lesquels peuvent venir se déplacer des tétons correspondants 85', 86', ces deux trous oblongs étant de directions parallèles, inclinés par rapport à l'axe de descente. Elle comporte également un troisième trou oblong 87 dans lequel peut se déplacer un téton correspondant 87'. Le téton et le trou oblong peuvent être disposés de façon inversée sur les pièces (téton 87'a).

Comme représenté sur la figure 7B on peut jouer sur la forme du troisième trou oblong 87 de manière à permettre des mouvements programmés. Ce trou peut prendre tout autre forme adéquate : arc de cercle, parabole, hyperbole..... On peut ainsi avoir différents angles successifs α, β et γ égaux respectivement à 45°, 0° et 30°.

On pourrait ainsi ajuster, à titre d'exemple, l'utilisation d'un électroaimant qui fournit une force à peu près proportionnelle au carré de la distance de sa pièce mobile. La forme de ce trou oblong pourrait être telle que l'effort fourni par électroaimant soit constante. Cette forme serait à peu près celle d'un exponentielle inverse à celle de la force fourni à la pièce mobile de électroaimant.

La deuxième pièce 82 (82') est actionnée par un élément muni d'un téton se déplaçant dans un trou oblong dont la forme peut être calculée de manière à permettre des mouvements programmés. Le téton et le trou oblong peuvent être disposés de façon inversée sur les pièces.

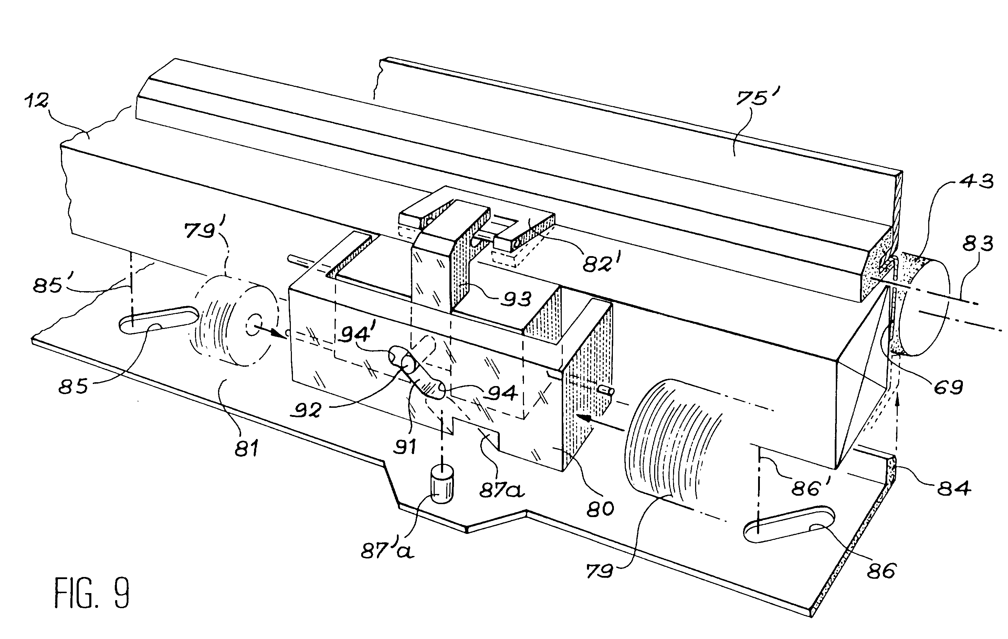

Les figures 8 et 9 illustrent une variante de réalisation de la seconde pièce 82.

Le chariot 80 comprend une glissière ou trou oblong 91 comportant au moins une position de blocage 94 (94') permettant par exemple de coincer le chariot 80 en extrémités de course dans laquelle peut se déplacer un téton 92 solidaire d'une fourchette 93.

Sur la figure 8 est également représentée une cellule photoélectrique 100

L'organigramme de fonctionnement du scanner de l'invention est le suivant :

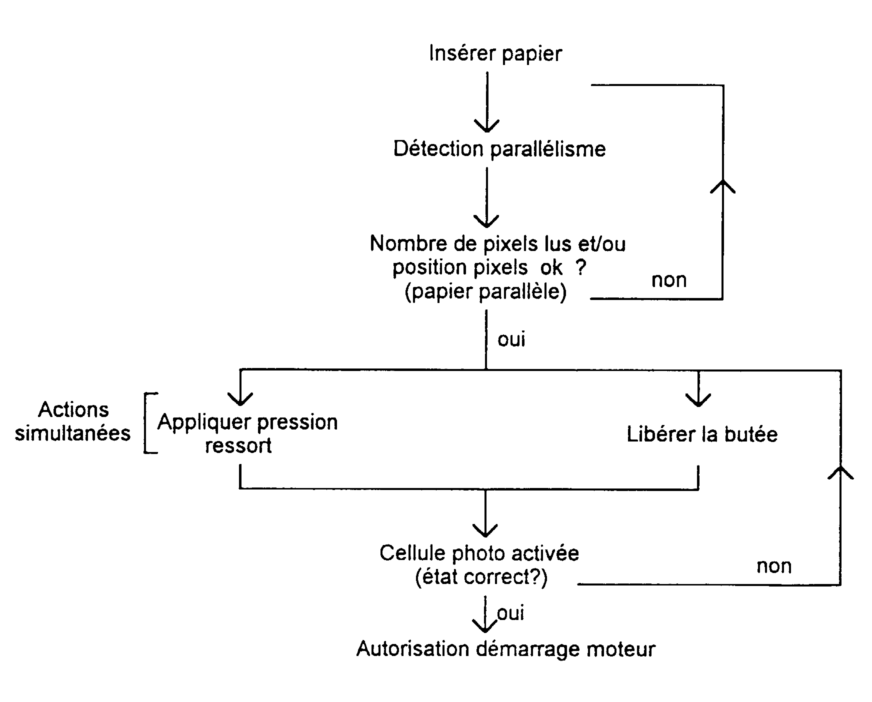

Le moteur 40 utilisé est par exemple un moteur pas-à-pas avec un faible nombre de pas par tour compris par exemple entre 12 et 48. Un tel moteur peut, s'il est bien contrôlé, tourner à des vitesses élevées tout en possédant un couple important. L'invention propose un système permettant un contrôle précis du pas du moteur. Un système d'engrenages 44 permet de réduire le nombre de tours ou la résolution désirée au rouleau d'entraînement. Le moteur peut également comporter un nombre de pas élevé évitant l'utilisation d'un réducteur.

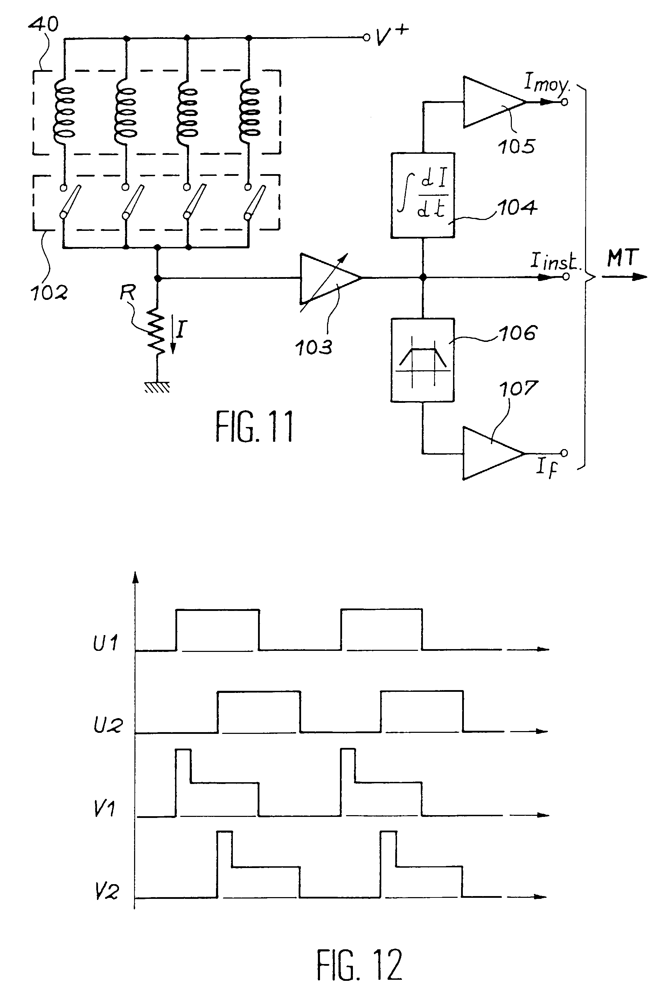

Comme représenté sur la figure 11 le système de contrôle du moteur 40 comporte entre autre des interrupteurs 102, des amplificateurs 103, 105, 107, et une résistance R insérée dans le circuit d'alimentation des enroulements du moteur. Cette résistance permet de mesurer le courant exact dans les enroulements.

On utilise ainsi :
- la valeur instantanée Iinst du courant pour mesurer :
   - la température du cuivre,
   - le flux magnétique précis dégagé,
   - l'avance ou retard des pas,
- la valeur moyenne Imoy du courant (intégrateur 104) pour mesurer :
   - la puissance absorbée ;
- un filtre 107 pour mesurer :
   - les paramètres de contrôle,
   - l'avance ou le retard des pas.

Les moyens de traitement MT reçoivent l'ensemble de ces valeurs, ce qui leur permet de calculer la correction de phase à appliquer aux différents enroulements.

Les enroulements, par ailleurs, peuvent être commandés par deux niveaux de tension permettant d'optimiser la consommation du moteur, comme représenté sur la figure 11. Sur cette figure sont représentés les deux signaux de commande 41 et 42 et les deux tensions V1 et V2 appliquées aux enroulements.

Dans une autre réalisation la mesure du courant permet d'alimenter le moteur à courant constant.

## Revendications

1. Scanner de tout type de document utilisant une rangée de capteurs (12) sans contact entre le document (15) à lire et l'axe optique de lecture, caractérisé en ce qu'il comprend un système (66) permettant d'introduire facilement le document (15) à lire grâce à un ensemble simultané de mouvements opposés, l'un de blocage-libération l'autre de libération-blocage du document (15), ledit système permettant d'assurer en outre le parallélisme du document introduit (15).

2. Scanner selon la revendication 1, caractérisé en ce qu'il comporte un rouleau (43) d'entraînement des documents introduits et une rangée de capteurs (12) dont l'angle (13) par rapport au scanner est réglable, ce qui permet de régler l'angle d'introduction de ce document (15).

3. Scanner selon la revendication 2, caractérisé en ce que le système (66) permet une introduction du document (15) avec une force d'introduction nulle, et concomitamment, lorsque le rouleau d'entraînement (43) tourne, ne permet un frottement que si l'introduction du document (15) a eu lieu.

4. Scanner selon l'une quelconque des revendications précédentes, caractérisé en ce qu'il comprend le corps (11) du scanner proprement dit autour duquel peut pivoter la rangée de capteurs (12) selon un angle (13), un bac de réception (14) permettant de recevoir le document introduit (15) après lecture par ledit scanner.

5. Scanner selon la revendication 4, caractérisé en ce que le corps du scanner est formé d'un profilé (20) aux deux extrémités latérales duquel sont fixés deux flasques (21, 22).

6. Scanner selon la revendication 5, caractérisé en ce que le profilé (20) a une forme de "Té".

7. Scanner selon la revendication 5, caractérisé en ce qu'il comporte un moteur (40) fixé sur l'un (22) des deux flasques, qui permet de faire tourner le rouleau (43) au moyen d'engrenages (44), ce moteur étant fixé retourné vers l'intérieur du scanner, de façon à ne pas allonger celui-ci.

8. Scanner selon la revendication 7, caractérisé en ce qu'aux deux extrémités de l'axe (45) de ce rouleau sont disposées respectivement une première bague palier (45) avec une collerette médiane (47), et une seconde bague palier (48) avec une collerette en extrémité (49), ce qui permet d'introduire la première extrémité dudit rouleau (43) munie de la première bague palier (46) dans un trou fermé (32) formé dans l'un des deux flasques, puis l'autre extrémité dans un trou ouvert (33) formé dans l'autre flasque (22), puis de fixer celui-ci à l'aide d'un moyen de fixation (50) situé dans un de ces deux flasques (22).

9. Scanner selon la revendication 8, caractérisé en ce qu'aux deux extrémités latérales de la rangée de capteurs (12) sont fixés deux embouts (55, 56), chacun de ces embouts (55, 56) étant muni de paliers enclipsables (58, 59) pouvant être introduit sur chacune des bagues (46 et 48), tout en permettant une rotation de la rangée de capteurs.

10. Scanner selon la revendication 9, caractérisé en ce que chacun des embouts comporte, de plus, un moyen de fixation de manière à permettre de bloquer la rangée de capteurs (12) à l'angle choisi.

11. Scanner selon la revendication 1, caractérisé en ce qu'il comporte au moins un guide (75, 75') qui permet une meilleure introduction du document à lire.

12. Scanner selon la revendication 1, caractérisé en ce qu'il comprend un ensemble de deux mécanismes (65, 81 ; 68, 82, 82') aptes à avoir simultanément des mouvements opposés coopérant chacun tour-à-tour avec le rouleau (43).

13. Scanner selon la revendication 12, caractérisé en ce que la forme des trous oblongs des mécanismes permet de programmer le déplacement des tétons.

14. Scanner selon la revendication 12, caractérisé en ce qu'il comprend au moins un moyen d'armement (70) et au moins un moyen de désarmement (74).

15. Scanner selon la revendication 12, caractérisé en ce qu'il comprend un moyen de détection (73) permettant la lecture de l'information indiquant que l'ensemble des mécanismes est bien en place.

16. Scanner selon la revendication 12, caractérisé en ce que le premier mécanisme (65 ; 81) comprend une butée (67; 84)) se terminant par un plan incliné sur lequel vient buter le document à lire en phase d'attente, avant la mise en route du moteur.

17. Scanner selon la revendication 16, caractérisé en ce que la butée (67 ; 84) a la forme d'un peigne laissant passer les saletés.

18. Scanner selon la revendication 16, caractérisé en ce que la butée (67 ; 84) comporte un angle de dégagement évitant au document de frotter lors du mouvement de celle-ci.

19. Scanner selon la revendication 12, caractérisé en ce que le second mécanisme (68 ; 82 ; 82') comprend un élément qui se termine par une lame ressort (69) qui vient plaquer le document contre le rouleau (43).

20. Scanner selon la revendication 12, caractérisé en ce que le système de mouvements opposés comprend une première pièce (81) se déplaçant selon un mouvement de translation, et une seconde pièce (82, 82') se déplaçant selon un mouvement de pivotement, mises en mouvement toutes deux par un chariot (80) commandé par un au moins un dispositif de génération de mouvement (79, 79').

21. Scanner selon la revendication 20, caractérisé en ce que le dispositif de génération de mouvement est un électroaimant.

22. Scanner selon la revendication 20, caractérisé en ce que le dispositif de génération de mouvement est un dispositif piézo-électrique.

23. Scanner selon la revendication 20, caractérisé en ce que le dispositif de génération de mouvement est un micromoteur.

24. Scanner selon la revendication 20, caractérisé en ce que la première pièce est munie de deux trous oblongs dans lesquels peuvent venir se déplacer des tétons correspondants, ces deux trous oblongs (85, 86) étant de directions parallèles inclinés par rapport à l'axe de descente.

25. Scanner selon la revendication 20, caractérisé en ce que la seconde pièce est actionnée par un élément muni d'un téton se déplaçant dans un trou oblong dont la forme est calculée pour permettre des mouvements programmés.

26. Scanner selon l'une quelconque des revendications 1 à 25, caractérisé en ce que les trous oblongs pratiqués dans les pièces en mouvement ont une forme calculée de manière à permettre des mouvements programmés.

27. Scanner selon la revendication 26, caractérisé en ce que ces trous constituent au moins un moyen de blocage.
